# EUROPÄISCHE PATENTSCHRIFT

(11) **EP 4 195 983 B1**
(45) Veröffentlichungstag und Bekanntmachung des Hinweises auf die Patenterteilung: **21.02.2024**
(21) Anmeldenummer: 21749099.4
(22) Anmeldetag: 08.07.2021
(51) Int. Cl.: A47J 36/06, A47J 37/10, A47J 36/38

(54) **KOCHTOPFDECKEL ZUR KONDENSATION VON WASSERDAMPF UND VERFAHREN ZU DESSEN HERSTELLUNG**
COOKING POT LID FOR CONDENSING STEAM, AND METHOD FOR PRODUCING SAME
COUVERCLE DE RÉCIPIENT DE CUISSON POUR LA CONDENSATION DE VAPEUR ET PROCÉDÉ DE PRODUCTION ASSOCIÉ

(30) Priorität: 14.08.2020 DE 102020210401
(43) Veröffentlichungstag der Anmeldung: 21.06.2023
(73) Patentinhaber: WMF GmbH, 73312 Geislingen/Steige (DE)
(72) Erfinder: ROTH, Klaus, 88527 Unlingen (DE); KÜHN, Manuel, 73525 Schwäbisch Gmünd (DE)
(74) Vertreter: Pfenning, Meinig & Partner mbB
(86) Internationale Anmeldenummer: PCT/EP2021/068966
(87) Internationale Veröffentlichungsnummer: WO 2022/033779

(56) Entgegenhaltungen:
- EP-A1- 0 092 277
- DE-U1-202011 104 626
- FR-A- 936 679
- FR-A- 937 348
- US-A1- 2002 040 711
- US-A1- 2014 110 406
- US-A1- 2017 172 345

## Beschreibung

Es wird ein Kochtopfdeckel zur Kondensation von Wasserdampf nach dem unabhängigen Anspruch 1 bereitgestellt. Der Kochtopfdeckel hat den Vorteil, dass er auf eine für den Benutzer einfache Art und Weise Wasserdampf über einen längeren Garzeitraum kondensieren kann und dabei eine Überhitzung des Griffs des Kochtopfdeckels vermeidet. Der Kochtopfdeckel weist den weiteren Vorteil auf, dass er ein gleichmäßiges Abtropfen von Kondenswasser auf ein Gargut ermöglicht. Ferner wird ein Verfahren zur Herstellung eines Kochtopfdeckel zur Kondensation von Wasserdampf bereitgestellt.

Bei Kochtopfdeckeln aus dem Stand der Technik, die meist aus Stahlguss gefertigt sind, wird eine Kühlwirkung des Kochtopfdeckels zur Kondensation von Wasserdampf meist über die Verwendung eines bestimmten Volumens (d.h. einer bestimmten Masse an Material) bereitgestellt. Dies führt dazu, dass die zwar eine gewisse Kondensationswirkung von Wasserdampf aufweisen, aber schwer sind, da Stahl eine hohe Dichte aufweist (ca. 7,9 g/cm³). Zudem hat Stahlguss eine nur geringe spezifische Wärmekapazität von unter 0,55 J/(g·K), wodurch pro Gewicht des Stahlgusses nur eine geringe Menge an Wärme zur Kondensation von Wasserdampf absorbiert werden kann.

Ebenfalls ist bei den bekannten Deckeln aus dem Stand der Technik nicht gewährleistet dass gebildetes Kondenswasser gleichmäßig auf das Gargut zurücktropft. Dies liegt daran, dass die Unterseite dieser bekannten Deckel nach oben oder nach unten gewölbt ist, was einen verstärkten Wasserlauf zum Topfrand oder zur Topfmitte bewirkt. Wenn überhaupt ist eine waagrechte Fläche auf der Unterseite des Topfdeckels nur partiell vorhanden.

Es ist ferner im Stand der Technik bekannt, diese Nachteile durch in die Unterseite des Kochtopfdeckels eingearbeitete Vorsprünge (z.B. Rampen oder Noppen) zu vermeiden. Jedoch kann durch die unterschiedliche Winkel an der Unterseite des Kochtopfdeckels, die durch die Wölbung entstehen, eine gleichmäßige Verteilung von Kondenswasser auf dem Gargut nicht gewährleistet werden.

Ferner weisen bekannte Kochtopfdeckel oft den Nachteil auf, dass die Temperatur an dem Griff des Kochtopfdeckels die Temperatur von 55 °C übersteigt, was für den Benutzer des Kochtopfdeckels die Gefahr einer Verbrennung am Griff birgt.

Die US 4,539,899 A offenbart einen Kochtopfdeckel, der mit einem Hohlraum versehen ist, um Wasser aufzunehmen, wobei eine Innenfläche des Deckels im Wesentlichen bogenförmig ausgestaltet ist, wodurch kondensierter Wasserdampf entlang der Wände des Kochtopfes fließen, so dass sie nicht direkt auf das Lebensmittel fallen.

Die US 2014/0110406 A1 offenbart einen Kochtopfdeckel, bei dem ein oberer Teil und ein unterer Teil so aneinander befestigt sind, dass die obere Oberfläche des unteren Teils und die untere Oberfläche des oberen Teils außer an den zu definierenden Perimetern voneinander beabstandet sind, wobei der obere und untere Teil des Deckels thermisch voneinander getrennt sind und die untere Oberfläche des unteren Teils des Deckels mehrere nach unten gerichtete Vorsprünge enthält.

Ausgehend hiervon war es die Aufgabe der vorliegenden Erfindung, einen Kochtopfdeckel bereitzustellen, der die im Stand der Technik bekannten Nachteile nicht aufweist. Insbesondere sollte der Kochtopfdeckel eine gegenüber den bekannten Kochtopfdeckeln verbesserte Kühlfunktion aufweisen, um Wasserdampf über längere Zeiträume effizient kondensieren zu können und eine Überhitzung des Kochtopfdeckelgriffs zu vermeiden. Der Kochtopfdeckel sollte zudem eine gleichmäßigere Verteilung von Kondenswasser auf dem Gargut ermöglichen.

Die Aufgabe wird gelöst durch den Kochtopfdeckel mit den Merkmalen von Anspruch 1 und das Verfahren mit den Merkmalen von Anspruch 14 Die abhängigen Ansprüche zeigen vorteilhafte Ausgestaltungsformen auf.

Erfindungsgemäß wird ein Kochtopfdeckel zur Kondensation von Wasserdampf bereitgestellt, dadurch gekennzeichnet, dass der Kochtopfdeckel einen fluiddichten Behälter, der ein Wärmeabsorptionsmaterial enthält, auf einer Oberseite des Kochtopfdeckels aufweist und/oder der Kochtopfdeckel einen fluiddichten Innenraum aufweist, der ein Wärmeabsorptionsmaterial enthält, wobei das Wärmeabsorptionsmaterial
a) eine spezifische Wärmekapazität von mindestens 0,55 J/(g·K) aufweist; und/oder
b) eine Phasenübergangstemperatur von fest nach flüssig aufweist, die im Bereich von -20 °C bis <100 °C liegt.

Ein Vorteil des erfindungsgemäßen Kochtopfdeckels ist, dass er ein Wärmeabsorptionsmaterial enthält, das eine hohe Kühlleistung aufweist. Die hohe Kühlleistung begründet sich durch die hohe spezifische Wärmekapazität und/oder die Phasenübergangstemperatur von test nach flüssig, die im Bereich von -20 °C bis <100 °C liegt. Das Wärmeabsorptionsmaterial kann somit in dem relevanten Bereich (von unter 100 °C) eine hohe Wärmemenge aufnehmen, ohne dass sich die Temperatur des Wärmeabsorptionsmaterials und damit des Kochtopfdeckels stark ändert. Die über den erfindungsgemäßen Deckel erreichbare Kühldauer ist dadurch gegenüber bekannten Kochtopfdeckeln verlängert, wodurch ein besseres Garergebnis möglich wird.

Ein weiterer Vorteil ist, dass das Wärmeabsorptionsmaterial entweder in einem fluiddichten Behälter auf der Oberseite des Kochtopfdeckels angeordnet ist und/oder in einem fluiddichten Innenraum des Kochtopfdeckels angeordnet ist. Dies bedeutet, dass dem Benutzer eine konstante Menge an Wärmeabsorptionsmaterial zur Verfügung steht und dieses Material nicht auslaufen kann und/oder ausgetauscht werden muss. Ferner muss ein Benutzer keine Rückstände im Deckel, die durch ein Verdampfen von Wärmeabsorptionsmaterial (z.B. Wasser) entstehen können (z.B. Kalk) im Rahmen einer Reinigung des Kochtopfdeckels entfernen. Der erfindungsgemäße Kochtopfdeckel ermöglicht es dem Benutzer somit, auf einfache und weniger arbeitsintensive Art und Weise eine reproduzierbare Kühlfunktion über den Kochtopfdeckel zu erzielen. Zudem stellt der Kochtopfdeckel sicher, dass für den Benutzer keine Gefahr von Verbrennungen durch auslaufendes Wärmeabsorptionsmaterial besteht.

Der erfindungsgemäße Kochtopfdeckel weist somit gegenüber bekannten Kochtopfdeckeln den Vorteil auf, dass er auf eine für den Benutzer einfache Art und Weise Wasserdampf über einen längeren Garzeitraum kondensieren kann und dabei eine Überhitzung des Griffs des Kochtopfdeckels vermeidet.

Der fluiddichte Behälter mit Wärmeabsorptionsmaterial dient als "Kühlakku" und hat den Vorteil, dass er auf einfache und platzsparende Art und Weise in einem Kühlschrank bzw. einem Gefrierschrank aufbewahrt werden kann. In einer bevorzugten Ausgestaltungsform weist der fluiddichte Behälter mindestens einen Griff auf. Der Vorteil hierbei ist, dass ein Benutzer den fluiddichten Behälter auf einfachere Art und Weise auf der Oberseite des Kochtopfdeckels platzieren und wieder entfernen kann.

Erfindungsgemäß wird unter dem Begritt "Kochtopfdeckel" auch ein Pfannendeckel verstanden.

Der Kochtopfdeckel kann dadurch gekennzeichnet sein, dass der fluiddichte Behälter mindestens 50%, bevorzugt mindestens 60%, besonders bevorzugt mindestens 70%, ganz besonders bevorzugt mindestens 80%, insbesondere mindestens 90%, der Fläche auf einer Oberseite eines Oberteils des Kochtopfdeckels kontaktiert. Der Vorteil ist, dass der Kontakt zur Oberseite des Deckels sehr großflächig ist, wodurch der Wärmetransfer von der Oberseite des Deckels zu dem Wärmeabsorptionsmaterial in dem fluiddichten Behälter sehr effizient ist.

Ferner kann der Kochtopfdeckel dadurch gekennzeichnet sein, dass der fluiddichte Innenraum zwischen einem Oberteil des Kochtopfdeckels und einem Unterteil des Kochtopfdeckels ausgebildet oder angeordnet ist, wobei bevorzugt das Oberteil und Unterteil des Kochtopfdeckels miteinander verschweißt sind. Der Vorteil dieser Ausgestaltungsform ist, dass das Wärmeabsorptionsmaterial fluiddicht in dem Kochtopfdeckel integriert ist, d.h. ein Benutzer braucht für die Kühlfunktion keinen fluiddichten Behälter mit dem Wärmematerial auf der Oberseite des Kochtopfdeckels anordnen, um die Kühlfunktion zu erreichen. Natürlich kann ein Benutzer trotzdem zusätzlich einen fluiddichten Behälter mit Wärmeabsorptionsmaterial auf der Oberseite des Kochtopfdeckels anordnen, falls eine länger anhaltende Kühlfunktion gewünscht ist. Durch das Verschweißen werden zudem Kanten und Räume vermieden, in denen sich Schmutz ansammeln kann.

Das Wärmeabsorptionsmaterial kann ein Material enthalten oder daraus bestehen, das eine spezifische Dichte von weniger als 7 g/cm³, bevorzugt weniger als 6 g/cm³, besonders bevorzugt weniger als 5 g/cm³, ganz besonders bevorzugt weniger als 4 g/cm³, insbesondere weniger als 3 g/cm³, aufweist. Vorteil hierbei ist, dass die Kühlfunktion bei einem geringen Gewicht des Kochtopfdeckels erreicht werden kann.

Ferner kann das Wärmeabsorptionsmaterial ein Material enthalten oder daraus bestehen, das eine spezifische Wärmekapazität von mindestens 0,60 J/(g·K), bevorzugt mindestens 0,70 J/(g·K), besonders bevorzugt mindestens 0,80 J/(g·K), aufweist. Vorteil hierbei ist, dass die Kühlfunktion über einen längeren Zeitraum anhält als bei einem Wärmeabsorptionsmaterial, das eine geringe spezifische Wärmekapazität aufweist (wie z.B. Stahlguss).

Darüber hinaus kann das Wärmeabsorptionsmaterial ein Material enthalten oder daraus bestehen, das ausgewählt ist aus der Gruppe bestehend aus Metall, Metalllegierung, Halbmetall und Kohlenstoff, wobei das Material bevorzugt ausgewählt ist aus der Gruppe bestehend aus Aluminium, Aluminiumlegierung, Magnesium, Magnesiumlegierung, Silizium, Graphit und Kombinationen hiervon. Die bevorzugten Materialien haben den Vorteil, dass sie bei einem geringen Gewicht eine hohe spezifische Wärmekapazität aufweisen.

Abgesehen davon kann das Wärmeabsorptionsmaterial ein Material enthalten oder daraus bestehen, das eine Phasenübergangstemperatur von fest nach flüssig aufweist, die im Bereich von ≥0 °C bis 90 °C, bevorzugt im Bereich von 5 °C bis 80°, besonders bevorzugt im Bereich von 10 °C bis 70 °C, ganz besonders bevorzugt im Bereich von 20 °C bis 60°C, insbesondere im Bereich von 30 °C bis 55 °C, liegt. Vorteil hierbei ist, dass das Wärmeabsorptionsmaterial den Kochtopfdeckel über einen langen Zeitraum während des Kochvorgangs auf einer Temperatur halten kann, die zur Kondensation von Wasser geeignet ist. Eine Phasenübergangstemperatur von 5°C und höher hat den zusätzlichen Vorteil, dass bereits Kühlschranktemperaturen ausreichen, um den Phasenübergang von flüssig nach fest zu bewirken, d.h. die Kühlfunktion des Kochtopfdeckels wieder bereitzustellen. Ein Benutzer des Kochtopfdeckels braucht somit keinen Gefrierschrank zur Verfügung, sondern lediglich einen Kühlschrank. Entsprechend ist der Vorteil einer Phasenübergangstemperatur von 30 °C und höher, dass bereits Raumtemperatur (25 °C) ausreicht, um die Kühlfunktion des Kochtopfdeckels zu regenerieren. Ein Benutzer des Kochtopfdeckels braucht somit noch nicht einmal einen Kühlschrank, um die Kühlfunktion des Kochtopfdeckels für einen erneuten Kochvorgang wieder bereitzustellen.

Ferner kann das Wärmeabsorptionsmaterial ein Material enthalten oder daraus bestehen, das eine spezifische Schmelzenthalpie von mindestens 300 MJ/m³, bevorzugt mindestens 350 MJ/m³, besonders bevorzugt mindestens 400 MJ/m³, insbesondere mindestens 450 MJ/m³, aufweist. Vorteil hierbei ist, dass eine hohe thermische Energie nötig ist, um die Phasenumwandlung des Wärmeabsorptionsmaterials von test nacn flussig zu bewirken, d.h. die Temperatur des Kochtopfdeckels kann über einen langen Zeitraum auf einem Wert gehalten werden, der die Kondensation von Wasser ermöglicht.

Ist das Wärmeabsorptionsmaterial ein Phasenübergangsmaterial, so kann es ein Material enthalten oder daraus bestehen, das ausgewählt ist aus der Gruppe bestehend aus Wasser, Paraffinen, Salzen, Metallhydroxiden, Fettsäuren und Kombinationen hiervon. Bevorzugt ist das Wärmeabsorptionsmaterial ausgewählt aus der Gruppe bestehend aus Wasser, Natriumacetat-Trihydrat, Natriumhydroxid, Bariumhydroxid, Ammoniumalaun, Natriumsulfid und Mischungen hiervon, optional ausgewählt aus der Gruppe bestehend aus Natriumacetat-Trihydrat, Natriumhydroxid, Bariumhydroxid, Ammoniumalaun, Natriumsulfid und Mischungen hiervon. Die genannten Wärmeabsorptionsmaterialien haben den Vorteil, dass sie eine Phasenübergangstemperatur im relevanten Bereich und eine hohe spezifische Schmelzenthalpie aufweisen, d.h. diese Materialien können sicherstellen, dass über die Kondensationsfunktion des Kochtopfdeckels über sehr lange Kochzeiträume aufrecht erhalten wird.

Das Wärmeabsorptionsmaterial kann ein Volumen von mindestens 0,2 cm · r²π, bevorzugt mindestens 0,3 cm · r²π besonders bevorzugt mindestens 0,4 cm · r²π, insbesondere von 0,4 cm · r²π bis 0,5 cm · r²π, aufweisen, wobei r der Radius einer Unterseite des Kochtopfdeckels in cm ist. Es hat sich herausgestellt, dass über ein solches Volumen des Wärmeabsorptionsmaterials der Kochtopfdeckel seine Kühlfunktion auch über sehr lange Kochvorgänge aufrechterhalten kann. Beispielhafte Volumina des Wärmeabsorptionsmaterials (bei einer Höhe von mindestens 0,4 cm des Wärmeabsorptionsmaterials) sind mindestens 0,4 cm · (8 cm)² · π = mindestens 80 cm³ Wärmeabsorptionsmaterial für Kochtopfdeckel mit einem Unterseiten-Durchmesser von 16 cm und mindestens 0,4 cm · (14 cm)² · π = mindestens 246 cm³ Wärmeabsorptionsmaterial für Kochtopfdeckel mit einem Unterseiten-Durchmesser von 28 cm.

Zumindest ein Teil des Kochtopfdeckels (der nicht aus Wärmeabsorptionsmaterial besteht), bevorzugt ein Oberteil und/oder ein Unterteil des Kochtopfdeckels, kann ein Material enthalten, das ausgewählt ist aus der Gruppe bestehend aus Metall, Glas, bis 200 °C hitzebeständigem Kunststoff und Kombinationen und Mischungen hiervon, bevorzugt ausgewählt aus der Gruppe bestehend aus Stahl, Edelstahl, Chromstahl, Silikon und Kombinationen und Mischungen hiervon, wobei das Material im Fall eines Metalls bevorzugt aus einem Blech geformt ist oder als Guss vorliegt.

Ferner kann eine Behälterwand des fluiddichten Behälters ein solches Material aufweisen. Darüber hinaus kann die Behälterwand des fluiddichten Behälters auf einer (der Oberseite des Kochtopfdeckels abgewandten) Seite eine thermische Isolierschicht aufweisen. Dies hat den Vorteil, dass der fluiddichte Behälter während des Kochvorgangs weniger stark Wärme aus der Umgebung aufnimmt und somit seine Kühlfunktion über einen längeren Zeitraum bereitstellen kann. Zwischen dem fluiddichten Behälter und einer Oberseite des Kochtopfdeckels kann ein thermisches Überträgermaterial (z.B. Wasser) angeordnet sein. Dadurch kann die Ausbildung von Hohlräumen zwischen dem fluiddichten Behälter und einer Oberseite des Kochtopfdeckels vermieden werden und ein effizienter Wärmeaustausch sichergestellt werden. Abgesehen davon können der fluiddichte Behälter und/oder eine Oberseite des Kochtopfdeckels eine Vorrichtung zur (reversiblen) mechanischen Verbindung des fluiddichten Behälters mit dem Kochtopfdeckel aufweisen. Hierdurch kann sich die Handhabung vereinfachen und die Sicherheit erhöht werden.

Eine Unterseite und/oder Oberseite des Kochtopfdeckels kann, optional über eine gesamte Oberfläche, fluiddicht ausgestaltet sein.

Erfindungsgemäß weist eine Unterseite des Kochtopfdeckels eine Vielzahl von Vorsprüngen auf, wobei eine Fläche der Unterseite des Kochtopfdeckels, die keine Vorsprünge aufweist, einen Zentralbereich und einen Randbereich aufweist.

Der Zentralbereich der Unterseite des Kochtopfdeckels ist planar ausgestaltet, wobei der Zentralbereich bevorzugt mindestens 70%, besonders bevorzugt mindestens 80%, insbesondere mindestens 90% der Gesamtfläche der Unterseite des Kochtopfdeckels einnimmt. Der Vorteil hierbei ist, dass in diesem Bereich des Kochtopfdeckels kondensiertes Wasser gleichmäßiger auf das Gargut abtropft als bei einem Zentralbereich auf der Unterseite des Kochtopfdeckels, der nach oben oder unten gewölbt ist.

Ferner kann der Randbereich der Unterseite des Kochtopfdeckels zum Zentralbereich um einen Winkel von 1 bis 10°, bevorzugt 2 bis 8°, besonders bevorzugt 4 bis 6°, in Richtung eines Oberteils des Kochtopfdeckels geneigt sein. Der Vorteil hierbei ist, dass in diesem Bereich des Kochtopfdeckels kondensierendes Wasser (über Schwerkraft) in Richtung des Zentralbereichs der Unterseite des Kochtopfdeckels geleitet wird und von dort auf das Gargut abtropfen kann.

Die Unterseite des Kochtopfdeckels kann mindestens 10 Vorsprünge pro dm³, bevorzugt mindestens 12 Vorsprünge pro dm³, besonders bevorzugt mindestens 14 Vorsprünge pro dm³, aufweisen, wobei insbesondere einer der Vorsprünge in einer Mitte der Unterseite des Kochtopfdeckels angeordnet ist. Je höher die Anzahl der Vorsprünge pro Fläche ist, desto gleichmäßiger kann kondensiertes Wasser auf das Gargut abtropfen, was das Garergebnis positiv beeinflusst.

Die auf der Unterseite des Kochtopfdeckels angeordneten Vorsprünge können (in Richtung Unterseite des Kochtopfdeckels) in die Unterseite des Kochtopfdeckels eingestanzt sein. Hierbei kann die Unterseite des Kochtopfdeckels eine Unterseite eines Unterteils des Kochtopfdeckels sein.

Die Vorsprünge können ferner auf einer Seite in Richtung Oberseite des Kochtopfdeckels das Material des fluiddichten Behälters oder den fluiddichten Behälter kontaktieren, wobei die gegenüberliegende Seite optional eine Oberseite eines Unterteils des Kochtopfdeckels ist. Dieser Kontakt hat den Vorteil, dass die Wärme effizienter von der Oberfläche der Unterseite des Kochtopfdeckels hin zum Wärmeabsorptionsmaterial geleitet bzw. abgeführt werden kann.

Die Vorsprünge sind bevorzugt im Wesentlichen gleichmäßig über eine gesamte Oberfläche der Unterseite des Kochtopfdeckels verteilt, wobei die Unterseite optional eine Unterseite eines Unterteils des Kochtopfdeckels ist. Die gleichmäßige Verteilung der Vorsprünge hat den Vorteil, dass das kondensierte Wasser gleichmäßig auf das Gargut abtropfen kann.

Ferner können die Vorsprünge zumindest bereichsweise eine Form aufweisen, die ausgewählt ist aus der Gruppe bestehend aus Halbkugelform, Halbellipsoidform, Konusform, Pyramidenform, Rippenform, Zylinderform und Kombinationen hiervon. Diese Formen haben sich als besonders geeignet erwiesen, ein gezieltes Abtropfen von kondensiertem Wasser zu bewirken.

Zudem können die Vorsprünge eine Höhe im Bereich von 0,5 bis 4 mm, bevorzugt 1 bis 3 mm, aufweisen, wobei die Höhe der Vorsprünge insbesondere von einem Zentrum der Unterseite zu einem Randbereich der Unterseite abnimmt. Diese Abmessung und dieser Verlauf der Vorsprünge haben sich für ein gleichmäßiges Abtropfen von kondensiertem Wasser als vorteilhaft herausgestellt.

Abgesehen davon können die Vorsprünge eine Breite im Bereich von 1 bis 20 cm, bevorzugt 2 bis 15 mm, besonders bevorzugt 5 bis 10 mm, aufweisen, wobei die Breite der Vorsprünge insbesondere von einem Zentrum der Unterseite zu einem Randbereich der Unterseite abnimmt. Auch diese Abmessungen und dieser Verlauf der Vorsprünge haben sich als vorteilhaft erwiesen, um ein gleichmäßiges Abtropfen von kondensiertem Wasser zu erreichen.

Der Kochtopfdeckel ist bevorzugt dadurch gekennzeichnet, dass eine Oberseite des Kochtopfdeckels einen Griff aufweist. Der Griff ist bevorzugt mit einer Oberseite des Kochtopfdeckels verbunden, bevorzugt über eine Verbindung ausgewählt aus der Gruppe bestehend aus Schweißverbindung, Klebeverbindung, Schraubverbindung und Kombinationen hiervon. Es ist vorteilhaft, wenn der Griff die Oberseite des Kochtopfdeckels lediglich auf einer Fläche von kleiner als 100 mm², insbesondere auf einer Fläche von 60 bis 80 mm², kontaktiert. Der Vorteil an dieser relativ kleinen Kontaktfläche ist, dass sich der Griff selbst dann nur langsam aufheizt, wenn das Wärmeabsorptionsmaterial bereits eine Temperatur erreicht hat, die für einen Benutzer als hohe Anfasstemperatur wahrgenommen wird (z.B. mehr als 55°C). Die kleine Kontaktfläche stellt also sicher, dass der Griff eine solche hohe Temperatur erst zeitverzögert oder gar nicht erreicht.

Der Griff kann einen im Wesentlichen parallel zur Oberseite des Kochtopfdeckels angeordneten Abschnitt aufweist, dessen Abstand zur Oberseite des Kochtopfdeckels mindestens 30 mm, bevorzugt mindestens 35 mm, beträgt.

Vorteil an dem relativen großen Abstand zur Oberseite des Kochtopfdeckels ist, dass der Benutzer vor einem Kontakt der Hand mit einer Oberseite des Kochtopfdeckels geschützt wird, falls diese bereits eine Temperatur erreicht hat, die für den Benutzer als unangenehm wahrgenommen wird. Zudem fungiert der Abstand als eine thermische Brücke, die ein Aufheizen dieses Abschnitts auf die Temperatur, die an der Oberfläche des Kochtopfdeckels herrscht, verzögert bis ganz vermeidet.

Der Griff kann ein Material enthalten oder daraus bestehen, das ausgewählt ist aus der Gruppe bestehend aus Metall, Glas, bis 200 °C hitzebeständigem Kunststoff und Kombinationen und Mischungen hiervon, wobei das Material bevorzugt ausgewählt aus der Gruppe bestehend aus Stahl, Edelstahl, Chromstahl, Silikon und Kombinationen und Mischungen hiervon.

Ferner wird ein Verfahren zur Herstellung eines Kochtopfdeckels zur Kondensation von Wasserdampf nach dem unabhängigen Anspruch 14 bereitgestellt.

Anhand der nachfolgenden Figuren soll der erfindungsgemäße Gegenstand näher erläutert werden, ohne diesen auf die hier dargestellten, spezifischen Ausgestaltungsformen einschränken zu wollen.

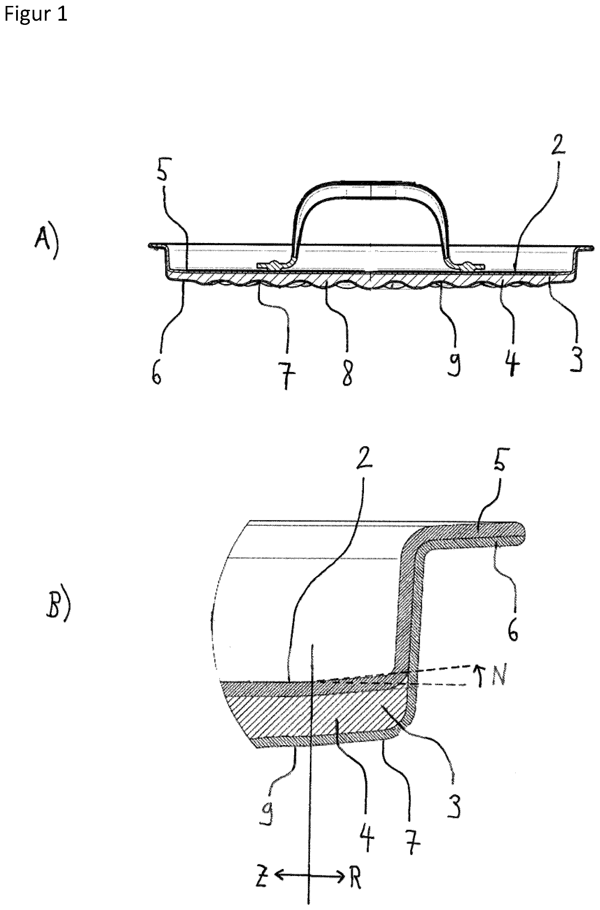

Figur 1A zeigt eine schematische Seitenansicht auf einen erfindungsgemäßen Kochtopfdeckel. Dieser Kochtopfdeckel ist zweiteilig aufgebaut, d.h. er weist ein Oberteil 5 auf, das mit einem Unterteil 6 verbunden ist (hier: verschweißt ist), wobei zwischen dem Oberteil 5 und dem Unterteil 6 ein fluiddichter Innenraum 3 vorliegt. Der fluiddichte Innenraum 3 enthält das Wärmeabsorptionsmaterial 4 (hier: Aluminium). Die Unterseite 7 des Kochtopfdeckels weist neben mehreren Vorsprüngen 8 in einem Zentralbereich eine planare vorsprungslose Fläche 9 auf. In einem Randbereich der Unterseite 7 ist die vorsprungslose Fläche 9 um einen bestimmten Neigungswinkel gegenüber der planaren vorsprungslosen Fläche 9 nach oben (d.h. in Richtung Oberteil 5 des Kochtopfdeckels) geneigt (hier: ca. 5°). Diese Variante des Kochtopfdeckels weist auf der Oberseite 2 des Kochtopfdeckels keinen fluiddichten Behälter mit Wärmeabsorptionsmaterial auf. Figur 1B zeigt einen vergrößerten Ausschnitt eines rechten Abschnitts des in der Figur 1 schematisch dargestellten Kochtopfdeckels. Es ist hier besser erkennbar, dass der Kochtopfdeckel aus einem Oberteil 5 und einem Unterteil 6 zusammengesetzt ist, die miteinander verbunden sind (hier: verschweißt sind), wobei zwischen dem Oberteil 5 und dem Unterteil 6 ein fluiddichter Innenraum 3 vorliegt, der das Wärmeabsorptionsmaterial 4 (hier: Aluminium) enthalt. Uber eine Linie ist zudem der Übergang der Unterseite 7 des Kochtopfdeckels von einem planaren Zentralbereich Z der vorsprungslosen Fläche 9 zu einem zum planaren Zentralbereich Z um einen Neigungswinkel N (hier: ca. 5°) geneigten Randbereich R der vorsprungslosen Fläche 9 dargestellt. Diese Variante des Kochtopfdeckels weist auf der Oberseite 2 des Kochtopfdeckels keinen fluiddichten Behälter mit Wärmeabsorptionsmaterial auf.

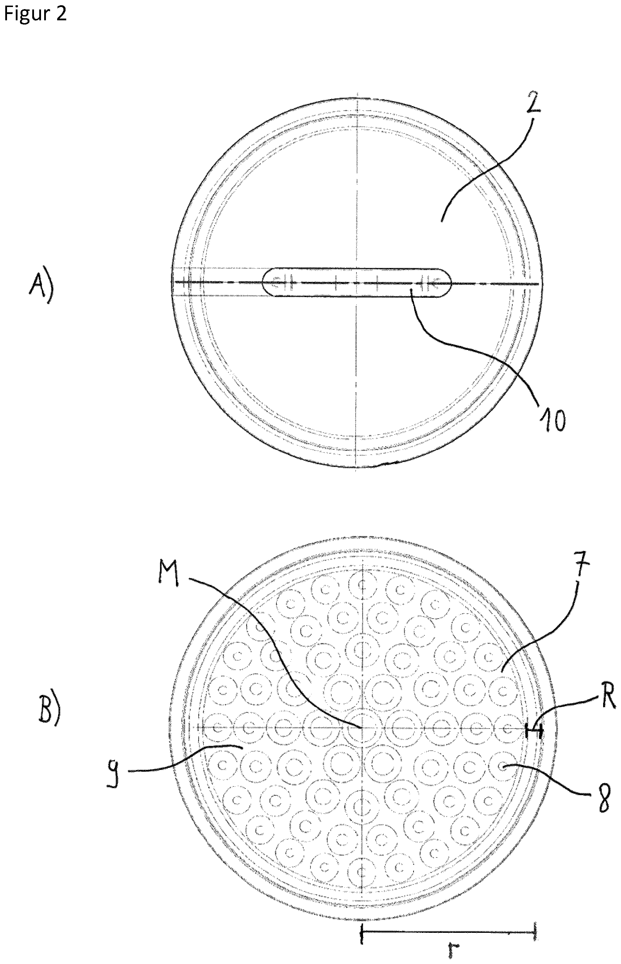

Figur 2A zeigt eine schematische Ansicht von oben auf einen erfindungsgemä-ßen Kochtopfdeckel. An der Oberseite 2 des Kochtopfdeckels ist ein Griff 10 befestigt. Figur 2B zeigt eine schematische Ansicht von unten auf diesen erfindungsgemäßen Kochtopfdeckel. Auf der Unterseite 7 des Kochtopfdeckels ist eine Vielzahl von Vorsprüngen 8 erkennbar, die sich aus einer planaren vorsprungslosen Fläche 9 der Unterseite 7 erheben. Der Durchmesser der Vorsprünge nimmt hier von der Mitte M der Unterseite 7 des Kochtopfdeckels entlang des Radius r des Kochtopfdeckels zu einem Randbereich R des Kochtopfdeckels hin ab.

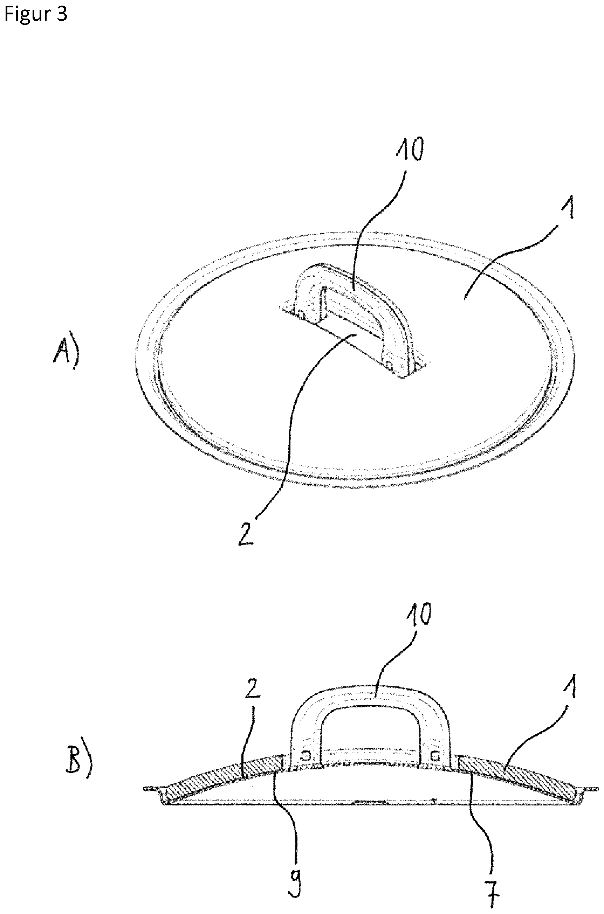

Figur 3A zeigt eine schematische Ansicht von oben auf einen Kochtopfdeckel, welcher nicht unter die Ansprüche fällt. An der Oberseite 2 des Kochtopfdeckels ist ein Griff 10 befestigt. Ferner weist dieser Kochtopfdeckel auf der Oberseite 2 einen fluiddichten Behälter 1 auf, der das Wärmeabsorptionsmaterial enthält. Figur 3B zeigt eine schematische Seitenansicht auf diesen Kochtopfdeckel, der einteilig ausgestaltet ist und an der Unterseite 7 lediglich aus einer vorsprungslosen Unterseite 9 besteht, d.h. an der Unterseite 7 keine Vorsprünge aufweist. Es ist zudem erkennbar, wie der fluiddichte Behälter 1, der das Wärmeabsorptionsmaterial enthält, auf der Oberseite 2 des Kochtopfdeckels aufliegt. Der Griff 10 ermöglicht ein einfaches Aufsetzen des Kochtopfdeckels auf einen Kochtopf (oder auf eine Pfanne) und Abheben von einem Kochtopf (oder von einer Pfanne).

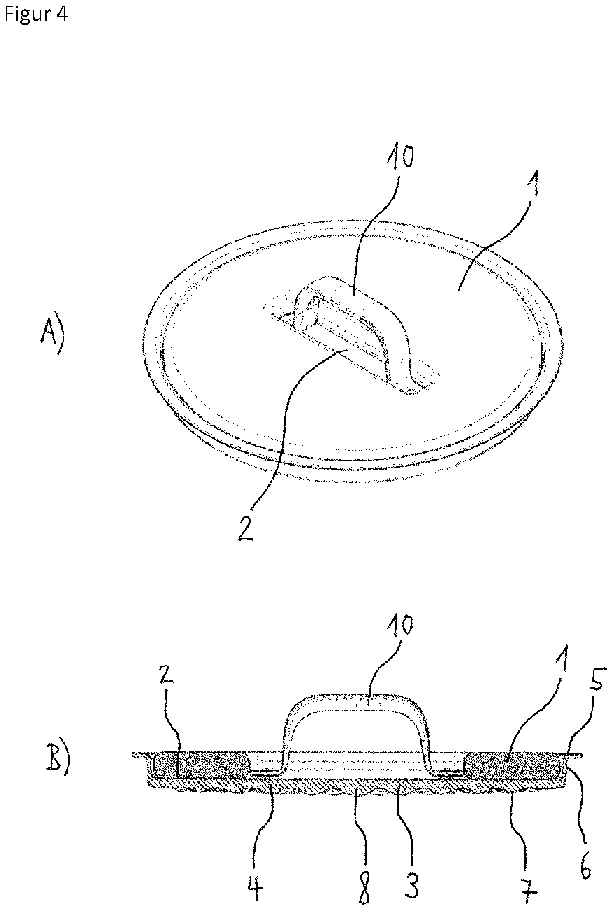

Figur 4A zeigt eine schematische Ansicht von oben auf einen erfindungsgemä-ßen Kochtopfdeckel. An der Oberseite 2 des Kochtopfdeckels ist ein Griff 10 befestigt. Ferner weist dieser Kochtopfdeckel auf der Oberseite 2 einen fluiddichten Behälter 1 auf, der das Wärmeabsorptionsmaterial enthält. Figur 4B zeigt eine schematische Seitenansicht auf diesen erfindungsgemäßen Kochtopfdeckel, der zweiteilig ausgestaltet ist, d.h. aus einem Oberteil 5 und einem Unterteil 6 zusammengesetzt ist, die miteinander verbunden sind (hier: verschweißt sind). Der fluiddichte Innenraum 3 zwischen dem Oberteil 5 und dem Unterteil 6 enthält das Wärmeabsorptionsmaterial 4. Dieser Kochtopfdeckel weist an der Unterseite 7 Vorsprünge 8 auf, die sich aus einer vorsprungslosen Fläche 9 der Unterseite 7 erheben. Es ist zudem erkennbar, wie der fluiddichte Behälter 1, der das Wärmeabsorptionsmaterial 4 enthält, auf der Oberseite 2 des Kochtopfdeckels aufliegt. Der Griff 10 ermöglicht ein einfaches Aufsetzen des Kochtopfdeckels auf einen Kochtopf (oder auf eine Pfanne) und Abheben von einem Kochtopf (oder von einer Pfanne).

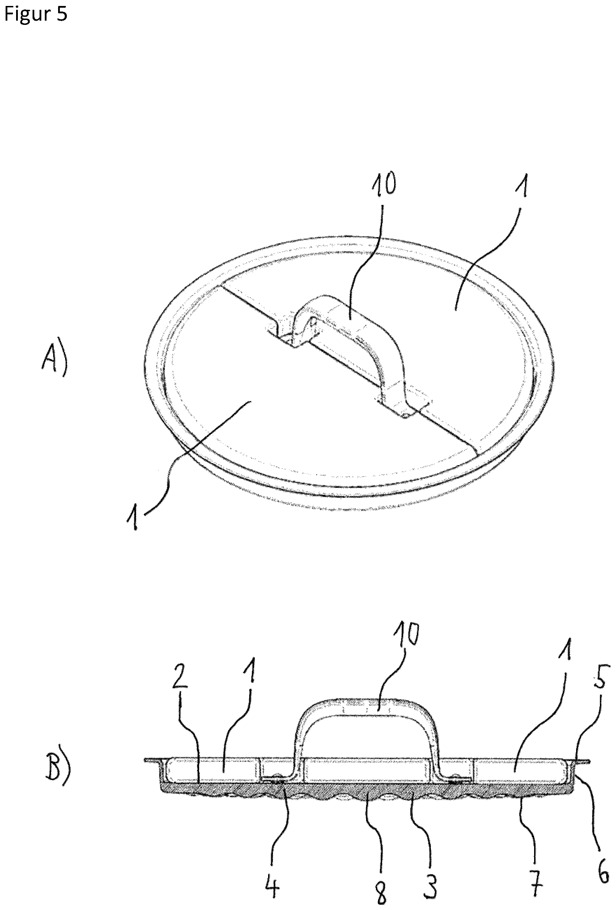

Figur 5A zeigt eine schematische Ansicht von oben auf einen erfindungsgemä-ßen Kochtopfdeckel. An der Oberseite 2 des Kochtopfdeckels ist ein Griff 10 befestigt. Ferner weist dieser Kochtopfdeckel auf der Oberseite 2 zwei fluiddichten Behälter 1 auf, die jeweils das Wärmeabsorptionsmaterial enthalten. Figur 5B zeigt eine schematische Seitenansicht auf diesen erfindungsgemäßen Kochtopfdeckel, der zweiteilig ausgestaltet ist, d.h. aus einem Oberteil 5 und einem Unterteil 6 zusammengesetzt ist, die miteinander verbunden sind (hier: verschweißt sind). Der fluiddichte Innenraum 3 zwischen dem Oberteil 5 und dem Unterteil 6 enthält das Wärmeabsorptionsmaterial 4. Dieser Kochtopfdeckel weist an der Unterseite 7 Vorsprünge 8 auf, die sich aus einer vorsprungslosen Fläche 9 der Unterseite 7 erheben. Es ist zudem erkennbar, wie die beiden fluiddichten Behälter 1, die das Wärmeabsorptionsmaterial 4 enthalten, auf der Oberseite 2 des Kochtopfdeckels aufliegen. Der Griff 10 ermöglicht ein einfaches Aufsetzen des Kochtopfdeckels auf einen Kochtopf (oder auf eine Pfanne) und Abheben von einem Kochtopf (oder von einer Pfanne).

### Bezugszeichenliste

- 1:: fluiddichter Behälter, der ein Wärmeabsorptionsmaterial enthält;
- 2:: Oberseite des Kochtopfdeckels;
- 3:: fluiddichter Innenraum des Kochtopfdeckels;
- 4:: Wärmeabsorptionsmaterial;
- 5:: Oberteil des Kochtopfdeckels;
- 6:: Unterteil des Kochtopfdeckels;
- 7:: Unterseite des Kochtopfdeckels;
- 8:: Vorsprung;
- 9:: Vorsprungslose Fläche der Unterseite des Kochtopfdeckels;
- 10:: Griff;
- Z:: Zentralbereich der Fläche 9;
- R:: Randbereich der Fläche 9;
- N:: Neigungswinkel vom Randbereich zum Zentralbereich der Fläche 9 (z.B. 5°);
- M:: Mitte der Unterseite des Kochtopfdeckels;
- r:: Radius der Unterseite des Kochtopfdeckels.

## Patentansprüche

1. Kochtopfdeckel zur Kondensation von Wasserdampf, wobei der Kochtopfdeckel einen fluiddichten Behälter (1), der ein Wärmeabsorptionsmaterial (4) enthält, auf einer Oberseite (2) des Kochtopfdeckels aufweist und/oder der Kochtopfdeckel einen fluiddichten Innenraum (3) aufweist, der ein Wärmeabsorptionsmaterial enthält, wobei das Wärmeabsorptionsmaterial (4)
a) eine spezifische Wärmekapazität von mindestens 0,55 J/(g·K) aufweist; und/oder
b) eine Phasenübergangstemperatur von fest nach flüssig aufweist, die im Bereich von -20 °C bis <100 °C liegt;
wobei eine Unterseite (7) des Kochtopfdeckels eine Vielzahl von Vorsprüngen (8) aufweist, wobei eine Fläche (9) der Unterseite (7) des Kochtopfdeckels, die keine Vorsprünge (8) aufweist, einen Zentralbereich (Z) und einen Randbereich (R) aufweist,
**dadurch gekennzeichnet, dass** der Zentralbereich (Z) der Fläche (9) planar ausgestaltet ist.

2. Kochtopfdeckel gemäß dem vorhergehenden Anspruch, **dadurch gekennzeichnet, dass** der Zentralbereich (Z) mindestens 70%, besonders bevorzugt mindestens 80%, insbesondere mindestens 90%, der Gesamtfläche der Unterseite (7) des Kochtopfdeckels einnimmt.

3. Kochtopfdeckel gemäß dem vorhergehenden Anspruch, **dadurch gekennzeichnet, dass** der fluiddichte Behälter (1) mindestens 50%, bevorzugt mindestens 60%, besonders bevorzugt mindestens 70%, ganz besonders bevorzugt mindestens 80%, insbesondere mindestens 90%, einer Fläche auf einer Oberseite (2) eines Oberteils (5) des Kochtopfdeckels kontaktiert.

4. Kochtopfdeckel gemäß einem der vorhergehenden Ansprüche, **dadurch gekennzeichnet, dass** der fluiddichte Innenraum (3) zwischen einem Oberteil (5) des Kochtopfdeckels und einem Unterteil (6) des Kochtopfdeckels ausgebildet oder angeordnet ist, wobei bevorzugt das Oberteil (5) und Unterteil (6) des Kochtopfdeckels miteinander verschweißt sind.

5. Kochtopfdeckel gemäß einem der vorhergehenden Ansprüche, **dadurch gekennzeichnet, dass** das Wärmeabsorptionsmaterial (4) ein Material enthält oder daraus besteht, das
i) eine spezifische Dichte von weniger als 7 g/cm^{3,} aufweist; oder
ii) eine spezifische Wärmekapazität von mindestens 0,60 J/(g·K) aufweist; oder
iii) ausgewählt ist aus der Gruppe bestehend aus Metall, Metalllegierung, Halbmetall und Kohlenstoff.

6. Kochtopfdeckel gemäß einem der vorhergehenden Ansprüche, **dadurch gekennzeichnet, dass** das Wärmeabsorptionsmaterial (4) ein Material enthält oder daraus besteht, das
i) eine Phasenübergangstemperatur von fest nach flüssig aufweist, die im Bereich von ≥0 °C bis 90 °C liegt; oder
ii) eine spezifische Schmelzenthalpie von mindestens 300 MJ/m³ aufweist; oder
iii) ausgewählt ist aus der Gruppe bestehend aus Wasser, Paraffinen, Salzen, Metallhydroxiden, Fettsäuren und Kombinationen hiervon.

7. Kochtopfdeckel gemäß einem der vorhergehenden Ansprüche, **dadurch gekennzeichnet, dass** das Wärmeabsorptionsmaterial (4) ein Volumen von mindestens 0,2 cm · r²π, bevorzugt mindestens 0,3 cm · r²π besonders bevorzugt mindestens 0,4 cm · r²π, insbesondere von 0,4 cm · r²π bis 0,5 cm · r²π, aufweist, wobei r der Radius einer Unterseite (7) des Kochtopfdeckels in cm ist.

8. Kochtopfdeckel gemäß einem der vorhergehenden Ansprüche,
**dadurch gekennzeichnet, dass** zumindest ein Teil des Kochtopfdeckels, bevorzugt ein Oberteil (5) und/oder ein Unterteil (6) des Kochtopfdeckels, ein Material enthält, das ausgewählt ist aus der Gruppe bestehend aus Metall, Glas, bis 200 °C hitzebeständigem Kunststoff und Kombinationen und Mischungen hiervon, bevorzugt ausgewählt aus der Gruppe bestehend aus Stahl, Edelstahl, Chromstahl, Silikon und Kombinationen und Mischungen hiervon, wobei das Material im Fall eines Metalls bevorzugt aus einem Blech geformt ist oder als Guss vorliegt.

9. Kochtopfdeckel gemäß einem der vorhergehenden Ansprüche,
**dadurch gekennzeichnet, dass** eine Unterseite (7) und/oder Oberseite (2) des Kochtopfdeckels, optional über eine gesamte Oberfläche, fluiddicht ausgestaltet ist.

10. Kochtopfdeckel gemäß einem der vorhergehenden Ansprüche,
**dadurch gekennzeichnet, dass** der Randbereich (R) der Fläche (9) zum Zentralbereich (Z) der Fläche (9) um einen Winkel (W) von 1 bis 10° in Richtung eines Oberteils (5) des Kochtopfdeckels geneigt ist.

11. Kochtopfdeckel gemäß Anspruch 10, **dadurch gekennzeichnet, dass** die Unterseite (7) des Kochtopfdeckels mindestens 10 Vorsprünge (8) pro dm³, bevorzugt mindestens 12 Vorsprünge (8) pro dm³, besonders bevorzugt mindestens 14 Vorsprünge (8) pro dm³, aufweist, wobei insbesondere einer der Vorsprünge (8) in einer Mitte (M) der Unterseite (7) des Kochtopfdeckels angeordnet ist.

12. Kochtopfdeckel gemäß einem der Ansprüche 10 oder 11, **dadurch gekennzeichnet, dass** die Vorsprünge (8)
i) in Richtung Unterseite (7) des Kochtopfdeckels in die Unterseite (7) des Kochtopfdeckels eingestanzt sind; oder
ii) auf einer Seite in Richtung Oberseite (2) des Kochtopfdeckels das Material des fluiddichten Behälters (1) oder den fluiddichten Behälter (1) kontaktieren; oder
iii) im Wesentlichen gleichmäßig über eine gesamte Oberfläche der Unterseite (7) des Kochtopfdeckels verteilt sind; oder
iv) zumindest bereichsweise eine Form aufweisen, die ausgewählt ist aus der Gruppe bestehend aus Halbkugelform, Halbellipsoidform, Konusform, Pyramidenform, Rippenform, Zylinderform und Kombinationen hiervon; oder
v) eine Höhe im Bereich von 0,5 bis 4 mm aufweisen; oder
vi) eine Breite im Bereich von 1 bis 20 cm aufweisen.

13. Kochtopfdeckel gemäß einem der vorhergehenden Ansprüche,
**dadurch gekennzeichnet, dass** eine Oberseite (2) des Kochtopfdeckels einen Griff (10) aufweist, wobei der Griff (10)
i) mit einer Oberseite (2) des Kochtopfdeckels verbunden; oder
ii) einen im Wesentlichen parallel zur Oberseite (2) des Kochtopfdeckels angeordneten Abschnitt aufweist, dessen Abstand zur Oberseite (2) des Kochtopfdeckels mindestens 30 mm beträgt; oder
iii) ein Material enthält oder daraus besteht, das ausgewählt ist aus der Gruppe bestehend aus Metall, Glas, bis 200 °C hitzebeständigem Kunststoff und Kombinationen und Mischungen hiervon.

14. Verfahren zur Herstellung eines Kochtopfdeckels zur Kondensation von Wasserdampf, umfassend die Schritte
a) Bereitstellen eines Kochtopfdeckels und Anordnen eines fluiddichten Behälters (1), der ein Wärmeabsorptionsmaterial (4) enthält, auf einer Oberseite (2) des Kochtopfdeckels; oder
b) Bereitstellen eines Unterteils (6) eines Kochtopfdeckels und Oberteils (5) eines Kochtopfdeckels, Anordnen eines Wärmeabsorptionsmaterials (4) zwischen dem Oberteil (5) und dem Unterteil (6) des Kochtopfdeckels und fluiddichtes Verbinden des Oberteils (5) und Unterteils (6), wobei zumindest das Unterteil (6) des Kochtopfdeckels, optional auch das Oberteil (5) des Kochtopfdeckels, das Wärmeabsorptionsmaterial (4) kontaktiert,
**dadurch gekennzeichnet, dass** das Wärmeabsorptionsmaterial (4)
i) eine spezifische Wärmekapazität von mindestens 0,55 J/(g·K) aufweist; und/oder
ii) eine Phasenübergangstemperatur von fest nach flüssig aufweist, die im Bereich von -20 °C bis <100 °C liegt;
**dadurch gekennzeichnet, dass** ein Kochtopfdeckel gemäß einem der Ansprüche 1 bis 13 hergestellt wird.

## Claims

1. A cooking pot lid for condensing water vapor, wherein the cooking pot lid comprises a fluid-tight container (1), which contains a heat absorbing material (4), on an upper surface (2) of the cooking pot lid, and/or the cooking pot lid comprises a fluid-tight interior space (3) containing a heat absorbing material, wherein the heat absorbing material (4)
a) has a specific heat capacity of at least 0.55 J/(g-K); and/or
b) a phase transition temperature from solid to liquid which is in the range of -20°C to <100°C;
wherein a lower surface (7) of the cooking pot lid comprises a plurality of protrusions (8), wherein a surface area (9) of the lower surface (7) of the cooking pot lid that does not include any protrusions (8) comprises a central region (Z) and an edge region (R),
**characterized in that** the central region (Z) of the surface area (9) is designed to be planar.

2. A cooking pot lid according to the preceding claim, **characterized in that** the central region (Z) takes up at least 70%, particularly preferably at least 80%, in particular at least 90%, of the overall surface area of the lower surface (7) of the cooking pot lid.

3. A cooking pot lid according to the preceding claim, **characterized in that** the fluid-tight container (1) makes contact with at least 50%, preferably at least 60%, particularly preferably at least 70%, most particularly preferably at least 80%, in particular at least 90%, of a surface area on an upper surface (2) of an upper part (5) of the cooking pot lid.

4. A cooking pot lid according to one of the preceding claims, **characterized in that** the fluid-tight interior space (3) is formed or arranged between an upper part (5) of the cooking pot lid and a lower part (6) of the cooking pot lid, wherein the upper part (5) and the lower part (6) of the cooking pot lid are preferably welded together.

5. A cooking pot lid according to one of the preceding claims, **characterized in that** the heat absorbing material (4) comprises or consists of a material that
(i) has a specific gravity of less than 7 g/cm³; or
(ii) has a specific heat capacity of at least 0.60 J/(g-K); or
(iii) is selected from the group consisting of metal, metal alloy, semimetal and carbon.

6. A cooking pot lid according to one of the preceding claims, **characterized in that** the heat absorbing material (4) comprises or consists of a material that
(i) has a phase transition temperature from solid to liquid which is in the range of ≥0 °C to 90 °C; or
(ii) has a specific enthalpy of fusion of at least 300 MJ/m³; or
(iii) is selected from the group consisting of water, paraffins, salts, metal hydroxides, fatty acids and combinations thereof.

7. A cooking pot lid according to one of the preceding claims, **characterized in that** the heat absorbing material (4) has a volume of at least 0.2 cm · r²π, preferably at least 0.3 cm · r²π, particularly preferably at least 0.4 cm · r²π, and in particular 0.4 cm · r²π to 0.5 cm · r²π, r being the radius of a lower surface (7) of the cooking pot lid in cm.

8. A cooking pot lid according to one of the preceding claims, **characterized in that** at least a part of the cooking pot lid, preferably an upper part (5) and/or a lower part (6) of the cooking pot lid, comprises a material that is selected from the group consisting of metal, glass, plastic material heat-resistant up to 200°C, and combinations and mixtures thereof, preferably selected from the group consisting of steel, stainless steel, chromium steel, silicone, and combinations and mixtures thereof, the material in the case of metal preferably being formed of a metal sheet or present as a casting.

9. A cooking pot lid according to one of the preceding claims, **characterized in that** a lower surface (7) and/or an upper surface (2) of the cooking pot lid has a fluid-tight design, optionally across the entire surface.

10. A cooking pot lid according to one of the preceding claims, **characterized in that** the edge region (R) of the surface area (9) is inclined with respect to the central region (Z) of the surface area (9) by an angle (W) of 1° to 10° in a direction of an upper part (5) of the cooking pot lid.

11. Cooking pot lid according to claim 10, **characterized in that** the lower surface (7) of the cooking pot lid comprises at least 10 protrusions (8) per dm³, preferably at least 12 protrusions (8) per dm³, particularly preferably at least 14 protrusions (8) per dm³, in particular one of the protrusions (8) being arranged in a center (M) of the lower surface (7) of the cooking pot lid.

12. The cooking pot lid according to one of claims 10 or 11, **characterized in that** the protrusions (8)
(i) are embossed into the lower surface (7) of the cooking pot lid in the direction of the lower surface (7) of the cooking pot lid; or
(ii) make, on a side in the direction of the upper surface (2), contact with the material of the fluid-tight container (1) or with the fluid-tight container (1); or
(iii) are distributed substantially uniformly over an entire surface of the lower surface (7) of the cooking pot lid; or
(iv) have a shape, at least in regions, that is selected from the group consisting a hemispherical shape, hemi-ellipsoid shape, conical shape, pyramidal shape, rib shape, cylindrical shape, and combinations thereof; or
(v) have a height in the range of 0.5 mm to 4 mm; or
(vi) have a width in the range of 1 cm to 20 cm.

13. A cooking pot lid according to one of the preceding claims, **characterized in that** an upper surface (2) of the cooking pot lid comprises a handle (10), the handle (10) being
(i) connected to an upper surface (2) of the cooking pot lid; or
(ii) has a section arranged substantially parallel to the upper surface (2) of the cooking pot lid, the distance of which to the upper surface (2) of the cooking pot lid is at least 30 mm; or
(iii) comprises or consists of a material selected from the group consisting of metal, glass, plastic heat resistant up to 200 °C and combinations and mixtures thereof.

14. A method for producing a cooking pot lid for condensing water vapor, comprising the steps of
a) providing a cooking pot lid and arranging a fluid-tight container (1), which contains a heat absorbing material (4), on an upper surface (2) of the cooking pot lid; or
b) providing a lower part (6) of a cooking pot lid and upper part (5) of a cooking pot lid, arranging a heat absorbing material (4) between the upper part (5) and the lower part (6) of the cooking pot lid and fluid-tight connecting the upper part (5) and lower part (6), wherein at least the lower part (6) of the cooking pot lid, optionally also the upper part (5) of the cooking pot lid, makes contact with the heat absorbing material (4),
**characterized in that** the heat absorbing material (4)
(i) has a specific heat capacity of at least 0.55 J/(g-K); and/or
(ii) has a phase transition temperature from solid to liquid which is in the range of -20°C to <100°C;
**characterized in that** a cooking pot lid according to any one of claims 1 to 13 is produced.

## Revendications

1. Couvercle de cocotte pour la condensation de vapeur d'eau, dans lequel le couvercle de cocotte présente un récipient étanche aux fluides (1), qui contient un matériau d'absorption de chaleur (4), sur une face supérieure (2) du couvercle de cocotte et/ou le couvercle de cocotte présente un espace intérieur étanche aux fluides (3), qui contient un matériau d'absorption de chaleur, dans lequel le matériau d'absorption de chaleur (4)
a) présente une capacité thermique spécifique d'au moins 0,55 J/(g.K) ; et/ou
b) présente une température de transition de phase de solide à liquide qui se situe dans la plage de -20 °C à <100 °C ;
dans lequel une face inférieure (7) du couvercle de cocotte présente une pluralité de saillies (8), dans lequel une surface (9) de la face inférieure (7) du couvercle de la cocotte, qui ne présente pas de saillies (8), présente une zone centrale (Z) et une zone de bord (R),
**caractérisé en ce que** la zone centrale (Z) de la surface (9) est configurée de manière plane.

2. Couvercle de cocotte selon la revendication précédente, **caractérisé en ce que** la zone centrale (Z) occupe au moins 70 %, de manière particulièrement préférée au moins 80 %, en particulier au moins 90 %, de la surface totale de la face inférieure (7) du couvercle de cocotte.

3. Couvercle de cocotte selon la revendication précédente, **caractérisé en ce que** le récipient étanche aux fluides (1) est en contact avec au moins 50 %, de préférence au moins 60 %, de manière particulièrement préférée au moins 70 %, de manière tout particulièrement préférée au moins 80 %, en particulier au moins 90 %, d'une surface sur une face supérieure (2) d'une partie supérieure (5) du couvercle de cocotte.

4. Couvercle de cocotte selon l'une quelconque des revendications précédentes, **caractérisé en ce que** l'espace intérieur (3) étanche aux fluides est réalisé ou disposé entre une partie supérieure (5) du couvercle de cocotte et une partie inférieure (6) du couvercle de cocotte, dans lequel de préférence la partie supérieure (5) et la partie inférieure (6) du couvercle de cocotte sont soudées l'une à l'autre.

5. Couvercle de cocotte selon l'une quelconque des revendications précédentes, **caractérisé en ce que** le matériau d'absorption de chaleur (4) contient ou est constitué d'un matériau qui
(i) présente une densité spécifique inférieure à 7 g/cm³ ; ou
(ii) présente une capacité thermique spécifique d'au moins 0,60 J/(g·K) ; ou
(iii) est choisi dans le groupe constitué par un métal, un alliage métallique, un semi-métal et du carbone.

6. Couvercle de cocotte selon l'une quelconque des revendications précédentes, **caractérisé en ce que** le matériau d'absorption de chaleur (4) contient ou est constitué d'un matériau qui
(i) présente une température de transition de phase de solide à liquide qui se situe dans la plage de ≥ 0 °C à 90 °C ; ou
(ii) présente une enthalpie de fusion spécifique d'au moins 300 MJ/m³ ; ou
(iii) est choisi dans le groupe constitué par l'eau, les paraffines, les sels, les hydroxydes métalliques, les acides gras et leurs combinaisons.

7. Couvercle de cocotte selon l'une quelconque des revendications précédentes, **caractérisé en ce que** le matériau d'absorption de chaleur (4) présente un volume d'au moins 0,2 cm • r²p, de préférence d'au moins 0,3 cm • r²p, de manière particulièrement préférée au moins 0,4 cm • r²p, en particulier de 0,4 cm • r²p à 0,5 cm • r²p, dans lequel r est le rayon d'une face inférieure (7) du couvercle de cocotte en cm.

8. Couvercle de cocotte selon l'une quelconque des revendications précédentes, **caractérisé en ce qu'**au moins une partie du couvercle de cocotte, de préférence une partie supérieure (5) et/ou une partie inférieure (6) du couvercle de cocotte, contient un matériau, qui est choisi dans le groupe constitué par le métal, le verre, la matière plastique résistant à la chaleur jusqu'à 200 °C, et leurs combinaisons et mélanges, de préférence choisi dans le groupe constitué par l'acier, l'acier inoxydable, l'acier chromé, le silicone et leurs combinaisons et mélanges, dans lequel le matériau est de préférence formé à partir d'une tôle dans le cas d'un métal ou se présente sous forme de fonte.

9. Couvercle de cocotte selon l'une quelconque des revendications précédentes, **caractérisé en ce qu'**une face inférieure (7) et/ou face supérieure (2) du couvercle de cocotte est réalisée de manière étanche aux fluides, éventuellement sur toute une surface.

10. Couvercle de cocotte selon l'une quelconque des revendications précédentes, **caractérisé en ce que** la zone de bord (R) de la surface (9) est inclinée par rapport à la zone centrale (Z) de la surface (9) d'un angle (W) de 1 à 10° en direction d'une partie supérieure (5) du couvercle de cocotte.

11. Couvercle de cocotte selon la revendication 10, **caractérisé en ce que** la face inférieure (7) du couvercle de cocotte présente au moins 10 saillies (8) par dm³, de préférence au moins 12 saillies (8) par dm³, de manière particulièrement préférée au moins 14 saillies (8) par dm³, dans lequel l'une des saillies (8) est notamment disposée au centre (M) de la face inférieure (7) du couvercle de cocotte.

12. Couvercle de cocotte selon l'une quelconque des revendications 10 ou 11, **caractérisé en ce que** les saillies (8)
(i) en direction de la face inférieure (7) du couvercle de cocotte sont pratiquées par poinçonnage dans la face inférieure (7) du couvercle de cocotte ; ou
(ii) sur une face en direction de la face supérieure (2) du couvercle de cocotte sont en contact avec le matériau du récipient étanche aux fluides (1) ou le récipient étanche aux fluides (1) ; ou
(iii) sont réparties de manière sensiblement uniforme sur toute une surface de la face inférieure (7) du couvercle de cocotte ; ou
(iv) présentent au moins par endroits une forme, qui est choisie dans le groupe constitué par une forme hémisphérique, forme semi-ellipsoïde, forme conique, forme pyramidale, forme nervurée, forme cylindrique et leurs combinaisons ; ou
(v) présentent une hauteur dans la plage de 0,5 à 4 mm ; ou
(vi) présentent une largeur dans la plage de 1 à 20 cm.

13. Couvercle de cocotte selon l'une quelconque des revendications précédentes, **caractérisé en ce qu'**une face supérieure (2) du couvercle de cocotte présente une poignée (10), dans lequel la poignée (10)
(i) est reliée à une face supérieure (2) du couvercle de cocotte ; ou
(ii) présente une section disposée essentiellement parallèlement à la face supérieure (2) du couvercle de cocotte, dont la distance par rapport à la face supérieure (2) du couvercle de cocotte est d'au moins 30 mm ; ou
(iii) contient ou est constitué d'un matériau, qui est choisi dans le groupe constitué par le métal, le verre, le plastique résistant à la chaleur jusqu'à 200 °C et leurs combinaisons et mélanges.

14. Procédé de fabrication d'un couvercle de cocotte pour la condensation de vapeur d'eau, comprenant les étapes
a) de fourniture d'un couvercle de cocotte et d'agencement d'un récipient étanche aux fluides (1), qui contient un matériau d'absorption de chaleur (4), sur une face supérieure (2) du couvercle de cocotte ; ou
b) de fourniture d'une partie inférieure (6) d'un couvercle de cocotte et d'une partie supérieure (5) d'un couvercle de cocotte, d'agencement d'un matériau d'absorption de chaleur (4) entre la partie supérieure (5) et la partie inférieure (6) du couvercle de cocotte, et de liaison étanche aux fluides de la partie supérieure (5) et de la partie inférieure (6), dans lequel au moins la partie inférieure (6) du couvercle de cocotte, et éventuellement également la partie supérieure (5) du couvercle de cocotte, est en contact avec le matériau d'absorption de chaleur (4),
**caractérisé en ce que** le matériau d'absorption de chaleur (4)
(i) présente une capacité thermique spécifique d'au moins 0,55 J/(g.K) ; et/ou
(ii) présente une température de transition de phase de solide à liquide qui se situe dans la plage de -20 °C à <100 °C ;
**caractérisé en ce qu'**un couvercle de cocotte est fabriqué selon l'une quelconque des revendications 1 à 13.
